# EUROPEAN PATENT SPECIFICATION

(11) **EP 4 624 654 B1**
(45) Date of publication and mention of the grant of the patent: **19.08.2026**
(21) Application number: 24167293.0
(22) Date of filing: 28.03.2024
(51) Int. Cl.: B60C 9/00, C08J 5/00, C08J 5/24, D06M 15/41, D06M 15/507, D06M 23/08, D06M 10/10, D06M 13/395, D06M 15/55, D06M 15/564, D06M 15/693, D06M 13/11, D06M 15/71, B29D 30/38, C08J 5/04

(54) **METHOD OF PRODUCING A SURFACE-MODIFIED TEXTILE AND SURFACE-MODIFIED TEXTILE OBTAINED BY SAID METHOD**
VERFAHREN ZUR HERSTELLUNG EINES OBERFLÄCHENMODIFIZIERTEN TEXTILS UND NACH DIESEM VERFAHREN HERGESTELLTES OBERFLÄCHENMODIFIZIERTES TEXTIL
PROCÉDÉ DE FABRICATION D'UN TEXTILE À SURFACE MODIFIÉE ET TEXTILE À SURFACE MODIFIÉE OBTENU PAR LEDIT PROCÉDÉ

(43) Date of publication of application: 01.10.2025
(73) Proprietor: Kordsa Teknik Tekstil A.S, 41310 Izmit / Kocaeli (TR)
(72) Inventor: Ayyildiz, Yucel, 41310 Izmit/Kocaeli (TR); Bag Celik, Esra, 41310 Izmit/Kocaeli (TR); Sen, Mustafa Yasin, 41310 Izmit/Kocaeli (TR)
(74) Representative: Müller-Boré & Partner Patentanwälte PartG mbB

(56) References cited:
- US-A1- 2022 135 825
- US-B2- 10 145 034

## Description

The present invention relates to a method of producing a surface-modified textile.

It is known that various components of motor vehicle tires include textiles for reinforcement. These textiles are generally based on multifilament textile cords or flat constructions like tapes also based on multifilament yarns. Other industrial elastomeric articles such as belts and hoses can also include such textiles. In tires or other industrial elastomeric articles, the textiles are typically provided together with an elastomeric compound.

One problem in this context is that the textile and the elastomeric compound normally have different strengths. Since the chemical and physical structures of the textile like a cord and the elastomeric compound are considerably different from each other, said materials are incompatible with each other. The textiles have high strength and low elongation whereas the elastomeric compounds are polymeric materials which have high elongation and low strength. The polar groups, such as amide groups, hydroxyl groups, and carbonyl groups, present in the structure of the textile are incompatible with the non-polar structure of the elastomeric compound.

However, under ongoing mechanical and dynamic stress, as in driving operation of a motor vehicle tire, adequate bonding between the textile and the surrounding elastomeric compound is necessary.

Traditionally, this incompatibility is eliminated by the activation of the textile prior to rubberization for adequate bonding (activation of bonding). This is typically achieved by treating the textile with a dipping composition which facilitates the subsequent bonding between the textile and the elastomeric compound. Such a dipping composition must fulfil various requirements. Most importantly, the dipping composition has to provide the activation of the textile so as to enable a good bonding between the textile and the elastomeric compound. The textile treated with the dipping composition should also provide good storage stability so that it is not necessary to immediately further process the treated textiles. Finally, the dipping composition should be easy to handle and well processable.

Traditionally, RFL (resorcinol-formaldehyde latex) containing dipping compositions have been used for this purpose, and the textile has been treated with such a dipping composition prior to bonding to the elastomeric compound. In addition, aqueous dipping compositions comprising blocked isocyanate compounds and/or epoxy compounds are known for use in combination with RFL dips in order to pre-activate or further activate the textiles (*cf* WO 2005/026239 A1).

Alternatively, several aqueous adhesive formulations that are (substantially) free of resorcinol and formaldehyde (RF free) have been reported in various studies, as both resorcinol and formaldehyde are classified as being harmful to health and the environment. For example, EP 3 935 214 B1 discloses an aqueous dipping composition which is free of resorcinol and formaldehyde and comprises rubber latex, a blocked isocyanate, a wax, an epoxy-containing compound, and a polymer with carboxylic acid functional groups. Apart from that, US 10 040 976 B2 discloses an RF-free aqueous formulation that includes an aromatic polyaldehyde, phloroglucinol, and an unsaturated elastomer latex.

Further aqueous RF-free dipping compositions have been described in WO 2015/188939 A1, WO 2014/175844 A2, and WO 2014/091376 A1. These aqueous compositions are based on an acrylic polymer resin, an epoxy resin, a blocked polyisocyanate and a styrene-butadiene (SBR) latex and/or a vinyl-pyridine (VP) latex. Another aqueous RF-free dipping composition is described in CN 106 084 362, wherein the composition consists of a blocked isocyanate, an epoxy compound, a rubber latex, a rubber modifier, and water.

In general, textiles, such as rubber reinforcing fibers made of rayon, can be adhered to elastomeric compounds readily after RFL treatment. On the other hand, polyester fibers and aramid fibers are relatively inert. Therefore, before RFL dipping, they require a pre-treatment for the activation of their surfaces. Such a pre-treatment can, for example, be done by passing the untreated fiber through a so-called "activation dip", which is in general an epoxy and blocked isocyanate based aqueous mixture.

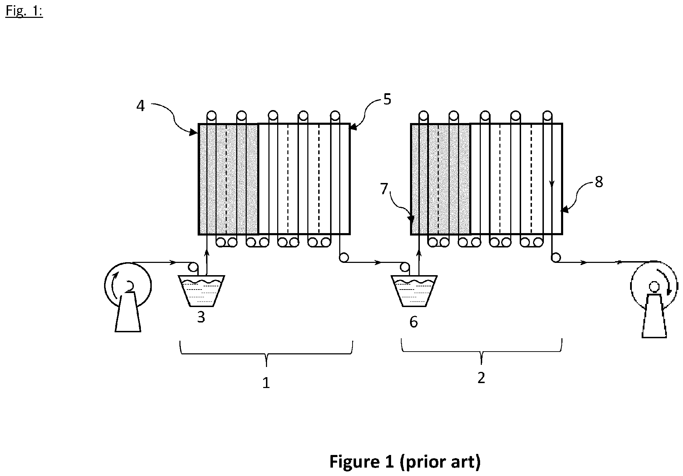

This common technology, which is known as "two-bath dipping method" or "two-bath treatment method", is schematically depicted in Fig. 1, wherein, in a first dipping zone (1), the cord is passed through an aqueous activation dipping composition (3), dried in a first drying-oven (4) for the removal of water, and heat-treated in a first heat-treating oven (5), and, in a second dipping zone (2), the activated cord is coated with an aqueous RFL composition or an aqueous RF-free composition (6), dried in a second drying oven (7) for the removal of water, and heat-treated in a second heat-treating oven (8).

However, when designing an aqueous activation dipping composition, all the chemicals used in the respective dipping composition (a) must be water-soluble or at least dispersible in water (the preparation of which requires energy and additional ingredients such as emulsifiers or surfactants), (b) must be compatible with each other, and (c) must not lead to problems such as precipitation or foaming after mixing the dipping ingredients. Apart from such limitations, a considerable amount of thermal energy is needed for the removal of water from the cord surface in the first drying oven (4). Moreover, concerning the adhesion properties between a textile and its surrounding elastomeric compound within an elastomeric article, an improvement is still necessary.

Accordingly, the technical problem underlying the present invention is to provide a method of producing a surface-modified textile, particularly surface-modified polyester and/or aramid cords, that (i) exhibits improved adhesion properties to an elastomeric compound and improved coverage by said elastomeric compound within an elastomeric article as well as (ii) renders tire cord production technology more sustainable.

Said technical problem is solved by the subject matter as characterized in claims. In particular, the method of producing a surface-modified textile according to the present invention comprises in that order the following steps:
(a) a first coating step of coating a surface of a textile with a powder by simultaneously subjecting the textile and the powder to an alternating electric field, wherein the powder comprises at least one blocked isocyanate group-containing compound and at least one epoxy group-containing compound;
(b) melting the powder;
(c) after step (b), performing a first heat-treatment step of heat-treating the coated textile;
(d) a second coating step of coating a surface of the heat-treated coated textile with an aqueous composition, wherein the aqueous composition comprises at least one latex-based compound and at least one resin forming composition;
(e) a drying step of drying the textile coated with the aqueous composition; and
(f) a second heat-treatment step of heat-treating the dried textile.

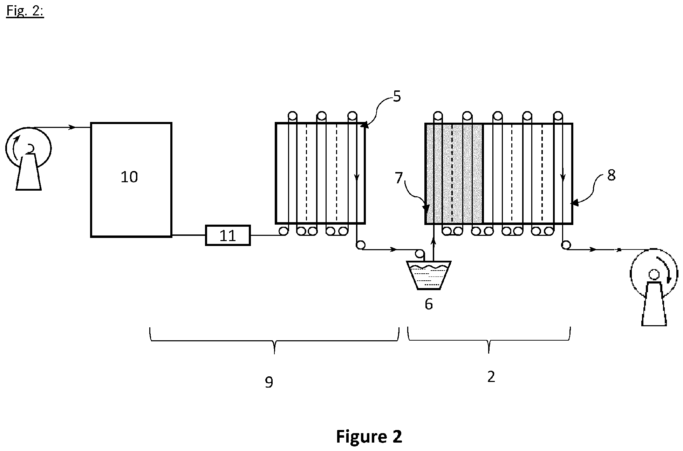

In this context, Fig. 2 demonstrates a schematic representation falling within the scope of the above-mentioned method of producing a surface-modified textile according to the present invention, but the present invention is not limited to said schematic representation.

Within said Fig. 2, in an activation powder coating zone (9), a surface of a cord is coated with a powder by simultaneously subjecting the cord and the powder to an alternating electric field within a coating device (10), wherein the powder comprises at least one blocked isocyanate group-containing compound and at least one epoxy group-containing compound, and, after having melted the powder in a melting zone (11), heat-treated in a first heat-treating oven (5), and then, in a dipping zone (2), the activated cord is coated with an aqueous RFL composition or an aqueous RF-free composition (6), dried in a second drying oven (7) for the removal of water, and heat-treated in a second heat-treating oven (8).

According to the present invention, in a first coating step, a surface of a textile is coated with a powder by simultaneously subjecting the textile and the powder to an alternating electric field, wherein the powder comprises at least one blocked isocyanate group-containing compound and at least one epoxy group-containing compound.

In this context, the textile to be surface-modified is not further limited, provided that its surface can be modified by the method of producing a surface-modified textile according to the present invention, and thus can be any suitable textile in this respect.

According to a preferred embodiment of the present invention, the textile comprises at least one of the group consisting of a polyester, a polyamide, a polyurethane, a polycarbonate, a polyketone, a polyether, a polyolefin, a poly(meth)acrylate, a polyamine, a polyurea, a polysiloxane, a polyvinylidene, an oligosaccharide, a polysaccharide, an oligopeptide, a polypeptide, an oligonucleotide, glass, carbon, derivatives thereof, and copolymers thereof.

Suitable polyesters include, for example, polyethylene terephthalate (PET), polyethylene naphthalate (PEN), polybutylene terephthalate (PBT), and polyethylene furanoate (PEF). Examples for polyamides include nylon-4,6 (polyamide 4.6), nylon-4, 10 (polyamide 4. 10), nylon-6 (polyamide 6), nylon-5,6 (polyamide 5.6), nylon-6,6 (polyamide 6.6), nylon-6,12 (polyamide 6.12), nylon-10,10 (polyamide 10. 10), and nylon-12, 12 (polyamide 12.12). Suitable polyamides further include aromatic polyamides such as aramids, particularly m-aramid, p-aramid and mixtures of m-aramid and p-aramid. Suitable polysaccharides include celluloses, for example, regenerated celluloses (in particular viscose or rayon) and cellulose esters.

In this context, according to a more preferred embodiment of the present invention, the textile comprises at least one polyester and/or at least one aramid.

The textile can be of any suitable form. For example, the textile can be in the form of single- or multifilament textile cords, or in the form of flat filament constructions like tapes, based on single- or multifilament yarns. According to a preferred embodiment of the present invention, the textile is a single-end cord or a tire cord fabric.

According to a preferred embodiment of the present invention, the textile comprises cords having at least one twisted yarn. Suitable finenesses (titre in the unit dtex) and ways of twisting the cords and yarns are known in the prior art. For example, the titre of each yarn may be between 200 and 5000 dtex and the twist of the yarns and cords may be between 100 and 800 t/m. The textile may also be made of cords each made from one yarn, which means that one twisted yarn constitutes each cord. Alternatively, it is also possible that the cords are made from at least two, more preferably exactly two yarns.

According to another preferred embodiment of the present invention, the textile is in the form of flat filament constructions such as tapes. The shape of the filaments may vary, and the final shape of the yarn itself may vary. The filament dtex can be in any suitable range and is preferably between 1 and 30 dtex. Here, dtex which is a direct measure of linear density can be determined in accordance with ASTM D-1907 (Standard Test Method For Linear Density Of Yarn (Yarn Number)).

According to the present invention, the powder is not further limited, provided that it comprises at least one blocked isocyanate group-containing compound and at least one epoxy group-containing compound and can be simultaneously subjected to an alternating electric field.

The at least one blocked isocyanate group-containing compound is not further limited but can be one suitable blocked isocyanate group-containing compound or two or more different suitable blocked isocyanate group-containing compounds. For instance, the at least one blocked isocyanate group-containing compound can be three, four, five, six, or seven different suitable blocked isocyanate group-containing compounds. According to a preferred embodiment of the present invention, the at least one blocked isocyanate group-containing compound comprises a compound having at least two blocked isocyanate groups.

According to a preferred embodiment of the present invention, an isocyanate group of the at least one blocked isocyanate group-containing compound is blocked (i) by a blocking group and/or (ii) by self-blocking, wherein self-blocking represents a dimerization or association of isocyanate groups to a higher homologue, such as uretdione diisocyanate. With respect to an improvement in sustainability self-blocking of the isocyanate group(s) is preferred. Moreover, when using a self-blocked isocyanate group-containing compound, blocking groups will beneficially not be present in the resulting coating film on the surface of the textile.

The blocking group is not further limited but can be any suitable blocking group for blocking an isocyanate group. Preferably, said blocking group can be at least one selected from the group consisting of phenol, thiophenol, chlorophenol, cresol, resorcinol, p-sec-butylphenol, p-tertbutylphenol, p-sec-amylphenol, p-octylphenol, p-nonylphenol, tert-butyl alcohol, diphenylamine, dimethylaniline, phthalimide, δ-valerolactam, ε-caprolactam, dialkyl malonate, acetylacetone, alkyl acetoacetate, acetoxime, methyl ethyl ketoxime, 3,5-dimethylpyrazole, cyclohexanone oxime, 3-hydroxypyridine, and acidic sodium sulfite. Most preferably, said blocking group is ε-caprolactam.

In case an isocyanate group of the at least one blocked isocyanate group-containing compound is blocked by a blocking group, the blocked isocyanate group can be preferably thermally dissociated into said isocyanate group and the blocking group. In case an isocyanate group of the at least one blocked isocyanate group-containing compound is blocked by self-blocking, the higher homologue of isocyanate groups can be preferably thermally dissociated into at least two isocyanate groups.

A typical temperature range for thermally induced dissociation of blocked isocyanate groups into their isocyanate groups and, if present, blocking groups, are known by a person skilled in the art but can be for example 90°C to 200°C, depending on the type of isocyanate compound and, if present, the type of blocking group.

In this context, the powder can further comprise at least one catalyst, which lowers the temperature range for thermally induced dissociation of blocked isocyanate groups into their isocyanate groups and, if present, blocking groups. Typical catalysts in this respect are known by a person skilled in the art but can be, for instance, amines, imidazoles, phosphonium salts, and organometallic compounds, such as dibutyltin dilaurate and dibutyltin diacetate. Not only deblocking catalysts, but also catalysts that can catalyze epoxy-isocyanate reactions to form oxazolidone and catalysts that favor the formation of trimeric isocyanates (isocyanurates) might be added, i.e. including those selected from dialkylzinc, zinc carboxylates, organozinc chelating compounds, trialkylaluminium; quaternary ammonium halides and alcohols; zinc chloride and ferric chloride; zinc bromide; lithium chloride; lithium n-butoxide; lithium bromide and tributyl phosphine oxide; phosphonium salts; monomer-soluble catalysts including organic metal chelates, alkyl glycidyl ammonium salts, trialkyl borates, and trialkyl phosphines; epoxy-soluble quaternary ammonium and/or lithium halide- phosphine oxide; alkoxides or phenoxides of metals of Group IIA or IIIA; organoantimony iodide; magnesium halide/phosphine oxide; chromium carboxylate; quaternary ammonium salts; nucleophilic amines and ammonium salts like tetrabutyl ammonium bromide; catalysts containing nitrogen heterocycles; 2-phenyl imidazole; imidazoles; 4,4'-methylene-bis(2-ethyl-5-methylimidazole); phosphines; alkyl phosphonium salts; ytterbium triflate (Yb(OTf)₃); BDMA; and tertiary amines.

According to a preferred embodiment of the present invention, an isocyanate group-containing compound of the at least one blocked isocyanate group-containing compound is at least one of the group consisting of tetramethylene diisocyanate, hexamethylene diisocyanate (HMDI), octamethylene diisocyanate, decamethylene diisocyanate, dodecamethylene diisocyanate, tetramethylxylylene diisocyanate, m- or p-xylene diisocyanate, 2,4'- or 4,4'-diisocyanatodiphenylmethane, isophorone diisocyanate (IPDI), 4,4'-methylenebis(cyclohexylisocyanate), trimethyl hexamethylene diisocyanate, dianisidine diisocyanate, 1,5-naphthylene diisocyanate, 1,4- diethylbenzene-beta,beta'-diisocyanate, 4,4'-methylene bis(phenylisocyanate) (MDI) and isomers thereof, toluene diisocyanate (TDI) and isomers thereof, and a polyisocyanate. More preferably, an isocyanate group-containing compound of the at least one blocked isocyanate group-containing compound is 4,4'-methylene bis(phenylisocyanate) (MDI) and/or a cycloaliphatic polyisocyanate adduct.

Still more preferably, the at least one blocked isocyanate group-containing compound is ε-caprolactam-blocked 4,4'-methylene bis(phenylisocyanate), such as Grilbond^{®} IL-6 from Ems-Griltech, or a cycloaliphatic polyisocyanate adduct, such as Vestagon^{®} BF 1331 from Evonik. Most preferably, the at least one blocked isocyanate group-containing compound is a cycloaliphatic polyisocyanate adduct, such as Vestagon^{®} BF 1331 from Evonik.

The powder may further contain 0.01 to 0.50 parts by mass of the at least one catalyst, which lowers the temperature range for thermally induced dissociation of blocked isocyanate groups, based on 100 parts by mass of the at least one blocked isocyanate group-containing compound.

According to the present invention, the at least one epoxy group-containing compound is not further limited but can be one suitable epoxy group-containing compound or two or more different suitable epoxy group-containing compounds. For instance, the at least one epoxy group-containing compound can be three, four, five, six, or seven different suitable epoxy group-containing compounds. Moreover, said at least one epoxy group-containing compound may comprise only one epoxy group or two or more epoxy groups.

The at least one epoxy group-containing compound is preferably at least one of the group consisting of a glycidyl ether epoxy resin, a glycidyl-based glycerol, a sorbitol-based epoxy compound, a phenol-based novolak epoxy compound, and a cresol-based novolak epoxy compound. Particularly, the at least one epoxy group-containing compound can be at least one of the group consisting of a bisphenol A-based epoxy resin, a diglycidyl ether of bisphenol-A, a diglycidyl ether of bisphenol-F, a bisphenol S-based epoxy resin, a cresol novolac epoxy resin, an alkylated epoxy novolac resin, a dicyclopentadiene phenol epoxy novolac resin, a tertbutylphenol epoxy novolac resin, a nonylphenol epoxy novolac resin, a naphthol epoxy novolac resin, and a glycidyl ether of tetraphenylolethane.

More preferably, the at least one epoxy group-containing compound is a bisphenol A-based epoxy resin, such as a novolac modified reaction product of epichlorohydrin and bisphenol A (D.E.R.^{®} 642U-20 from Dow Chemical) or a cresol novolac epoxy resin, such as an epoxidized ortho-cresylic novolac (Araldite^{®} ECN 9699 from Huntsman). Most preferably the at least one epoxy group-containing compound is a novolac modified reaction product of epichlorohydrin and bisphenol A (D.E.R.^{®} 642U-20 from Dow Chemical).

According to a preferred embodiment of the present invention, the at least one epoxy group-containing compound exhibits a softening point of 50 to 200°C, more preferably 60 to 150°C, most preferably 70 to 100°C. Thus, the at least one epoxy group-containing compound can exhibit a softening point of 50 to 150°C, 50 to 100°C, 60 to 200°C, 60 to 100°C, 70 to 200°C, or 70 to 150°C. The softening point of the at least one epoxy group-containing compound can be determined by ASTM D3104 [Standard Test Method for Softening Point of Pitches (Mettler Softening Point Method)].

Preferably, the at least one epoxy group-containing compound exhibits an epoxy equivalent weight (EEW) of 400 to 800 g/eq., more preferably 500 to 700 g/eq., most preferably 500 to 600 g/eq., wherein the EEW is defined as the number of grams of epoxy resin required to give 1 mole of epoxy group. The EEW of the at least one epoxy group-containing compound can be determined by ASTM D-1652 (Standard Test Method for Epoxy Content of Epoxy Resins).

The at least one epoxy group-containing compound preferably exhibits a weight average molecular weight (M_{w}) of 3500 to 5000 Dalton, more preferably 4000 to 4500 Dalton, determined by means of refractive index detector (conventional calibration) and GPC (mobile phase: THF; standards: polystyrene and PMMA).

An example of the at least one epoxy group-containing compound, wherein the softening point, the epoxy equivalent weight (EEW), and the weight average molecular weight (M_{w}) fall within the above-defined ranges, are a novolac modified reaction product of epichlorohydrin and bisphenol A (D.E.R.^{®} 642U-20 from Dow Chemical).

According to a preferred embodiment of the present invention, a molar ratio of the at least one blocked isocyanate group-containing compound to the at least one epoxy group-containing compound within the powder is 0.5 to 3.0, more preferably 0.7 to 2.0, still more preferably 0.9 to 1.6, most preferably 1.1 to 1.3. Accordingly, the molar ratio of the at least one blocked isocyanate group-containing compound to the at least one epoxy group-containing compound within the powder can be 0.5 to 2.0, 0.5 to 1.6, 0.5 to 1.3, 0.7 to 3.0, 0.7 to 1.6, 0.7 to 1.3, 0.9 to 3.0, 0.9 to 2.0, 0.9 to 1.3, 1.1 to 3.0, 1.1 to 2.0, or 1.1 to 1.6. By ensuring that the molar ratio of the at least one blocked isocyanate group-containing compound to the at least one epoxy group-containing compound within the powder falls within the above-specified range, an adhesive film (or an active surface) leading to superior adhesion performance is obtained.

According to a preferred embodiment of the present invention, in addition to the at least one blocked isocyanate group-containing compound and the at least one epoxy group-containing compound, the powder preferably further comprises at least one wax. Said at least one wax is not further limited but can be one suitable wax or two or more different suitable waxes.

Preferably, the at least one wax is at least one selected from the group consisting of paraffin wax, microcrystalline wax, synthetic wax, and wax from natural sources such as from honeybees. More specifically, the at least one wax can include branched and/or unbranched hydrocarbons, having the main fraction (*i.e.,* the middle 80% fraction) with a carbon chain length from 15 to 100.

Most preferably, the at least one wax comprises a low-density polyethylene (LDPE) wax, such as A-C^{®} 8A from Honeywell. In case the powder further comprises a low-density polyethylene (LDPE) wax, the over-cure adhesion properties of the surface-modified textile to an elastomeric compound within an elastomeric article produced are beneficially improved.

According to a preferred embodiment of the present invention, the powder contains 0.1 to 3.0, more preferably 0.5 to 2.0, most preferably 0.8 to 1.2 % by weight of the at least one wax.

The powder can further comprise at least one pigment. Said at least one pigment is not further limited but can be one type of pigment or two or more different types of suitable pigments. Said at least one pigment is preferably at least one of the group consisting of an azo-based pigment, phthalocyanine, iron oxide, a cobalt-based pigment, a silicate-based pigment, a chromate-based pigment, titanium dioxide, zinc oxide, bismuth vanadate, cyanine green, navy blue, and cyanine blue. According to a preferred embodiment of the present invention, the powder contains 0.1 to 5.0, more preferably 0.3 to 3.0, most preferably 0.5 to 1.0 % by weight of pigment, based on the total weight of the powder. Such pigment can be useful for improved differentiation in further processing, still having the possibility to check the quality of the coating e.g. that there are no damages on the surface, if the coating is well distributed.

According to a preferred embodiment of the present invention, the coated textile resulting from the first coating step comprises 0.3 to 3.0, more preferably 0.4 to 2.0, and most preferably 0.6 to 1.5 % by weight of the coated powder, based on the total weight of the textile.

According to the present invention, in a first coating step, a surface of a textile is coated with a powder by simultaneously subjecting the textile and the powder to an alternating electric field. Preferably, the alternating electric field is generated by two opposite-facing electrodes, wherein at least one dielectric screen between said two opposite-facing electrodes insulates the two electrodes from each other, and wherein the first coating step is performed within the alternating electric field between said two opposite-facing electrodes. Particularly, the surface of the textile is coated with the powder by simultaneously subjecting the textile and the powder to an alternating electric field generated by a device comprising a pair of opposite-facing electrodes, each of which is connected to one of two terminals of an alternating voltage source or a generator and which constitute a lower electrode and an upper electrode. Each of these two electrodes is supported by a plate that is made of a dielectric material and forms an insulating screen. Screens are located between the electrodes to electrically insulate them from each other. Between them, they delimit a planar passage for the textile.

A unit that transports the textile through the passage in feed direction comprises two belt conveyors which are arranged one on top of each other so that they are substantially parallel to each other. Respective belts of these two conveyors pass through the passage parallel to each other and in the same direction. Once the textile has been gripped between these belts, together they can feed it through the passage. To make it possible to transport textiles of different thicknesses, the vertical distance between the conveyors is adjustable in a manner which is known in itself.

Each of the electrodes is discontinuous and consists of a row of successive conducting strips that are separated from each other by slot-shaped discontinuities or gaps where there is no conductive material. Said strips extend from the left-hand side to the right-hand side of the passage over the entire width of the passage and are not parallel to direction of travel. Although they run alongside each other, the conducting strips of a single electrode can have various shapes.

Each conducting strip comprises two longitudinal edges and two main opposite faces that longitudinal edges link to each other and are an internal face which, overall, is turned towards the passage and the external face. Each slot is delimited by the two longitudinal edges, each of which is located on one of two successive strips. Each conducting strip has a longitudinal edge that runs alongside one of slots which separates it from another conducting strip.

The electrodes are provided to generate an alternating electric field between the electrodes at the level of passage. To achieve this, the conducting strips of one of the two electrodes can be arranged in several ways relative to the conducting strips of the other electrode.

Dielectric screens electrically insulate the electrodes from each other to prevent electric arcing between the two electrodes. To do this, they are arranged between electrodes, either side of the passage. The dielectric material used to make screens can be glass. It is possible to only cover one of the two electrodes with a screen, especially if the chosen application allows the use of relatively low electric field levels. However, each electrode is preferably provided with an insulating screen.

The conveyors bring the textile and the powder together between the electrodes, in the passage, and transport them substantially continuously. At the level of the passage, the alternating electric field generated by the electrodes causes the powder to coat onto the surface of the textile. Because it is an alternating field, the field generated between the electrodes has a maximum value which is selected depending on the application, especially taking into account the distinctive features of the textile and/or the powder. Maximum field values from 0.1 to 20.0 kV/mm have proved suitable in numerous applications. Also, the power supply voltage of the electrodes can have various wave shapes. For instance, the generator can produce a sinusoidal, square wave or even sawtooth voltage.

The frequency of the electric field generated between the electrodes is chosen depending on the particular application. Frequencies from 50 to 60 Hz have proved suitable in numerous applications. Satisfactory coating is only obtained after the textile and the powder have been exposed to the alternating electric field for a sufficient time. This depends on the application in question and other process parameters. It can easily be determined experimentally. Generally speaking, this time is longer than one second, for instance, 1 to 60 seconds, preferably 1 to 20 seconds, most preferably 1 to 5 seconds.

Usually, at least 90%, more preferably at least 95%, most preferably at least 99% of the surface of the textile is coated with the powder.

According to the present invention, after the first coating step (a), the powder is melted, typically for a short time like 5 to 10 seconds at temperatures of about 100 - 200°C, in a melting zone. By melting the powder composition after coating the textile surface with the textile fiber it stays on the yarn surface until the heat treatment (curing) process is carried out in the production line. Without melting, the powder would fall down while the cord/fabric passes through the rollers in the production line.

Subsequent, in the first heat-treatment step (c), said coated textile is heat-treated within a first heat treatment temperature range of 90 to 250°C, more preferably 180 to 250°C, most preferably 220 to 245°C. Preferably, in the first heat-treatment step, the coated textile resulting out of the first coating step is heat-treated for 10 to 80 seconds, more preferably 20 to 70 seconds, most preferably 30 to 50 seconds.

Said first heat-treatment can be performed by any suitable means, preferably by hot-drawing. This can be done using known devices, such as especially 1- or 2-zone ovens, through which the coated textile is preferably passed continuously. Besides, in the first heat treatment step, the coated textile resulting out of the first coating step can be heat-treated at two or more different temperatures, which are conducted in succession and falling within the above-mentioned first heat treatment temperature range.

According to the present invention, in a second coating step after the first heat treatment step, the heat-treated coated textile is additionally coated with an aqueous composition. Said aqueous composition is not further limited, provided that it comprises at least one latex-based compound, at least one resin forming composition, and water. This aqueous composition can be a RFL (resorcinol-formaldehyde latex) or RFL-free dip, the latter for example being composed of RF-free resin components like epoxy, acid, isocyanate.

According to the present invention, the at least one latex-based compound is not further limited but can be one suitable latex-based compound or two or more different suitable latex-based compounds.

Preferably, the at least one latex-based compound is at least one selected from the group consisting of natural rubber latex, styrene-butadiene rubber latex, ethylene-propylene-diene rubber latex, butyl rubber latex, styrene-butadiene-vinylpyridine rubber latex, nitrile butadiene rubber latex, chloroprene rubber latex, isoprene rubber latex, butadiene rubber latex, ethylenevinyl acetate rubber latex, hydrogenated nitrile-butadiene rubber latex, polyacrylate rubber latex, chloropolyethylene rubber latex, chlorosulfonated polyethylene rubber latex, ethylene-propylene rubber latex, fluoro rubber latex, epichlorohydrin rubber latex, epichlorohydrin copolymer rubber latex, propylene oxide copolymer rubber latex, bromobutyl rubber latex, chlorobutyl rubber latex, silicone rubber latex, and functionalized rubber latex.

More preferably, the at least one latex-based compound is at least one selected from the group consisting of natural rubber latex, styrene-butadiene rubber latex, ethylene-propylene-diene rubber latex, butyl rubber latex, styrene-butadiene-vinylpyridine rubber latex, nitrile butadiene rubber latex, chloroprene rubber latex, isoprene rubber latex, butadiene rubber latex, and functionalized rubber latex.

According to a most preferred embodiment of the present invention, the at least one latex-based compound is styrene-butadiene-vinylpyridine rubber latex and/or styrene-butadiene rubber latex.

The aqueous composition can be a resorcinol-formaldehyde latex (RFL)-containing aqueous composition. Commonly available RFL-containing aqueous compositions are known by a person skilled in the art.

Alternatively, the aqueous composition can be essentially free of resorcinol, resorcinol precondensates, formaldehyde, and formaldehyde-releasing substances (RF-free). In the context, the term "essentially free of' is to be understood in that these substances are allowed to be present only in amounts which do not materially affect the essential characteristics of the aqueous composition. For example, the amount of these substances shall not go beyond trace amounts arising from some contamination. Typically, not more than 0.1 mass% (dry weight), based on the total mass of the aqueous composition, of each of resorcinol, resorcinol precondensates, formaldehyde, and formaldehyde-releasing substances shall be contained in the aqueous composition, *i.e.* 0.1 mass% (dry weight) is the maximum amount individually for each of the above components. Preferably, the content of resorcinol, resorcinol precondensates, formaldehyde, and formaldehyde-releasing substances in the aqueous composition is 0.0 mass% (dry weight).

In this context, instead of resorcinol and formaldehyde, the resin forming composition can comprise the above-defined at least one blocked isocyanate group-containing compound in combination with at least one of (i) the above-defined at least one epoxy group-containing compound or (ii) at least one polymer with carboxylic acid groups. Detailed resin forming compositions in this respect are known to a person skilled in the art, for instance, from EP 3 702 522 A1.

Further possible RF-free resin forming compositions concerning the at least one resin forming composition of the present invention are described in US 10 040 976 B2, WO 2015/ 188939 A1, WO 2014/175844 A2, WO 2014/091376 A1, and CN 106 084 362 A.

The aqueous composition can further comprise at least one filler, which can be any suitable material which is known in the art for use as a filler. Said at least one filler is not further limited but can be one type of suitable filler or two or more different types of suitable fillers. Preferably, the at least one filler is soluble or dispersible in water.

Suitable examples for fillers are water-dispersible inorganic fillers, such as oxides, hydroxides, carbonates, sulfates, sulfides, carbon black, graphite, graphene, fullerenes, carbon nanotubes, and combinations thereof.

Suitable oxides include, for example, silica, silicate, alkaline earth oxides such as calcium oxide and magnesium oxide, zinc oxide, titanium dioxide, aluminium oxide, and combinations thereof. Suitable hydroxides include, for example, alkaline earth hydroxides such as magnesium oxide, aluminium hydroxide, and combinations thereof. Suitable carbonates include, for example, alkaline earth carbonates such as calcium carbonate, magnesium carbonate, and combinations thereof. Suitable sulfates include, for example, alkaline earth sulfates such as barium sulfate. Suitable sulfides include, for example, iron sulfide. Suitable carbon blacks include, for example, acetylene black, thermal black, channel black, gas black, furnace black, lamp black, pyrolytic carbon black, and combinations thereof.

Preferably, the at least one filler is selected from the group consisting of silica, silicate, carbon black, graphite, graphene, fullerenes, carbon nanotubes, alkaline earth carbonates, alkaline earth oxides, zinc oxide, titanium dioxide, aluminum oxide, alkaline earth hydroxides, aluminum hydroxide, and combinations thereof. Most preferably, the at least one filler is selected from the group consisting of silica, silicate, carbon black, zinc oxide, and combinations thereof.

The aqueous composition can further comprise at least one of the group consisting of the above-defined at least one wax, the above-defined at least one pigment, a tackifier, an anti-foaming agent, and a wetting agent. In this respect, each of the above-defined at least one wax, the above-defined at least one pigment, the tackifier, the anti-foaming agent, and the wetting agent preferably is soluble or dispersible in water.

In the second coating step, the coating of a surface of the heat-treated coated textile with the aqueous composition is not further limited, provided that a surface of the heat-treated coated textile is coated with the aqueous composition. In this context, preferably at least 90%, more preferably at least 95%, most preferably at least 99% of the surface of the heat-treated coated textile is coated with the aqueous composition.

In particular, the coating of a surface of the heat-treated coated textile with the aqueous composition can be done in any suitable way known to a person skilled in the art. For example, said coating can be done by dipping, spraying, or applying the aqueous composition to the heat-treated coated textile. Preferably, said coating is done by dipping, for example by preparing a bath including the aqueous composition and dipping the heat-treated coated textile into this bath. Accordingly, in the second coating step, the aqueous composition is preferably an aqueous dipping composition, wherein the heat-treated coated textile is at least once dipped into the aqueous dipping composition.

According to the present invention, in a drying step after the second coating step, the textile coated with the aqueous composition is dried. Due to said drying step, water can be removed. Said drying step is not further limited, provided that the textile coated with the aqueous composition is dried. Within said drying step, the textile coated with the aqueous composition is dried at a temperature of 100 to 240°C, more preferably 120 to 220°C, most preferably 140 to 200°C. The time of drying the textile coated with the aqueous composition is not further limited but can be, for instance, 20 to 40 seconds.

According to the present invention, in a second heat-treatment step after the drying step, the dried textile is (again) heat-treated. Said second heat-treatment step is not further limited, provided that the dried textile resulting out of the drying step is treated by heat.

According to a preferred embodiment of the present invention, in the second heat-treatment step, the dried textile resulting out of the drying step is heat-treated within a second heat treatment temperature range of 130 to 250°C, more preferably 140 to 245°C, most preferably 215 to 240°C. Preferably, in the second heat-treatment step, the dried textile resulting out of the drying step is heat-treated for 30 to 100 seconds, more preferably 40 to 70 seconds, most preferably 40 to 60 seconds.

Said second heat-treatment can be performed by any suitable means, preferably by hot-drawing. This can be done using known devices, such as especially 1- or 2-zone ovens, through which the dried textile is preferably passed continuously. Besides, in the second heat treatment step, the dried textile resulting out of the drying step can be heat-treated at two or more different temperatures, which are conducted in succession and falling within the above-mentioned second heat treatment temperature range.

A surface-modified textile is obtained by the above-defined method of producing a surface-modified textile according to the present invention.

In addition, an elastomeric article described herein comprises (i) at least one elastomeric compound and (ii) the said surface-modified textile obtained by the above-defined method of producing a surface-modified textile according to the present invention. Said elastomeric article is not further limited, provided that it comprises at least one elastomeric compound and (ii) the said surface-modified textile obtained by the above-defined method of producing a surface-modified textile according to the present invention.

According to a preferred embodiment, the elastomeric article is a tire or a rubber article, such as a belt, a conveyor belt, a transmission belt, a drive belt, a hose, a strip belt, a transport belt, and an air bellow.

The elastomeric article can be obtained by a production method comprising the steps of (i) providing a surface-modified textile obtained by the above-defined method of producing a surface-modified textile according to the present invention, (ii) combining said surface-modified textile with a rubberizing composition to give a green elastomeric article, and (iii) vulcanizing said green elastomeric article.

According to step (ii) of said production method, the surface-modified textile is combined with a rubberizing composition. This combining can be done, for example, by coating the surface-modified textile with the rubberizing composition, or by calendering the surface-modified textile together with the rubberizing composition. It is also possible to press the surface-modified textile into the rubberizing composition.

The rubberizing composition is not further limited but can be any suitable composition, which results in at least one elastomeric compound after the above-mentioned vulcanizing step (iii). The rubberizing composition preferably comprises at least one diene rubber selected from the group consisting of a natural polyisoprene rubber, a synthetic polyisoprene rubber, a polybutadiene rubber, and a styrene-butadiene copolymer rubber.

For example, the polyisoprene may be either cis-1,4-polyisoprene or 3,4-polyisoprene. The polybutadiene may be either cis-1,4-polybutadiene or vinyl polybutadiene having a vinyl content of 10% to 90% by weight. The styrene-butadiene copolymers may be solution-polymerized styrene-butadiene copolymers having a styrene content, based on the polymer, of 10% to 45% by weight and a vinyl content (content of 1,2-bonded butadiene, based on the overall polymer) of 10% to 70% by weight. It is alternatively possible to use emulsion-polymerized styrene-butadiene copolymers, wherein the styrene content is 15% to 50% by weight.

The diene rubbers, especially styrene-butadiene copolymers, can also be used in partly or fully functionalized form. The functionalization can be performed with groups which can interact with the optional fillers used, especially with fillers bearing OH groups. Functionalizations may, for example, be those with hydroxyl groups and/or epoxy groups and/or siloxane groups and/or amino groups and/or phthalocyanine groups and/or carboxyl groups and/or silane sulfide groups.

The rubberizing composition preferably further comprises at least one of the group consisting of the above-defined at least one filler, the above-defined at least one wax, an aging stabilizer, an activator, a tackifier resin, a masticating aid, a processing aid, and a plasticizer.

The vulcanization of the green elastomeric article in step (iii) may be conducted in the presence of sulfur and/or sulfur donors, and some sulfur donors can simultaneously act as vulcanization accelerators. Sulfur or sulfur donors may be added to the rubberizing composition in the amounts that are commonly used by a person skilled in the art, for instance 0.4 to 8 parts based on 100 parts of rubber (phr). The vulcanization can also be performed in the presence of very small amounts of sulfur in combination with sulfur donor substances. The vulcanization can be carried out at any suitable temperature, preferably at a temperature of 100 to 250°C, more preferably at a temperature of 130 to 180°C, wherein optionally a pressure of 10 to 200 bar can be applied.

The figures show:
- Fig. 1:: Schematic illustration of a prior art technology, which is known as "two-bath dipping method" or "two-bath treatment method".
- Fig. 2:: Schematic illustration of a production method falling within the scope of the method of producing a surface-modified textile according to the present invention,

The present invention will be further illustrated in the following examples without being limited thereto.

### Examples

### Production method of Example 1:

Cords made from polyester (polyethylene terephthalate (PET), 2-plied, 1670 dtex, 390x390 twisted, non-adhesive activated) were powder coated applying an alternating electric field with a powder consisting of ε-caprolactam-blocked 4,4'-methylene diphenyl diisocyanate (Grilbond^{®} IL-6 from Ems-Griltech) and novolac modified reaction product of epichlorohydrin and bisphenol A (D.E.R.^{®} 642U-20 from Dow Chemical) in a molar ratio of 1.2, which corresponds to a weight ratio of 0.5 (or a mass percentage of 35 %, weight of isocyanate/weight of epoxy=0.5/1; therefore, in 1,5 g mixture there is 0.5 g isocyanate which corresponds to 35%).

Subsequently, the resulting powder-coated polyester cords were exposed to a short heat treatment for melting the powder at 100 - 200°C for 1-10 seconds (step (b)) and subsequently then heat treated in a furnace at 220 - 250°C for 30-60 seconds (step (c)).

Afterwards, the heat-treated coated polyester cords were dipped into a commercially available aqueous RFL dipping composition.

Afterwards, the heat-treated coated polyester cords were dipped into an aqueous RFL dipping composition. The cord is then dried at 120-140C for 20-60 seconds and heat treated at 220-250 seconds for 30-60 seconds. A typical RFL dip solution recipe is as follows:

| | **Wet part (g)** | **Dry part (g)** |
|---|---|---|
| Soft Water | 119.2 | - |
| Resorcinol (100%) | 9.9 | 9.9 |
| Formaldehyde (37%) | 11.0 | 4.1 |
| Sodium hydroxide (10%) | 2.7 | 0.3 |
| Soft water | 134.4 | - |
| VP latex (41%) | 209.1 | 85.7 |
| Ammonium hydroxide (25%) | 13.7 | - |
| TOTAL | 500.0 | 100.0 |

Subsequently, said surface-modified polyester cords were covered with a first rubberizing composition according to Table 1 or a second proprietary rubberizing composition. A specimen including two plies of fabric bonded with rubber was produced, in order to measure the stripping force required to separate these two plies of fabric bonded with rubber. The cord density was 90 epdm (ends per decimeter). This composite material was then vulcanized at 160°C under a pressure of 7.5 bar for 20 minutes to obtain the final elastomeric article.

**Table 1:**

| Constituents of the first rubberizing composition | Amount [phr] |
|---|---|
| Natural rubber | 70.0 |
| Styrene-butadiene copolymer rubber | 30.0 |
| N660 carbon black | 50.0 |
| Zinc oxide | 4.0 |
| Stearic acid | 2.0 |
| Oil | 5.0 |
| Penacolite (resorcinol-formaldehyde) | 3.0 |
| Hexamethoxymethyl melamine | 2.0 |
| 2,2,4-Trimethyl-1,2-dihydroquinoline (TMQ) | 1.8 |
| Sulphur | 2.5 |
| 2,2'-Dibenzothiazyl disulphide (MBTS) | 0.8 |

### Production method of Example 2:

Example 2 were produced in same manner as Example 1 except of using an internally blocked cycloaliphatic polyisocyanate adduct (Vestagon^{®} BF 1321 from Evonik) as the isocyanate compound. The composition of isocyanate/epoxy mixture by weight was 39/61.

### Production method of Example 3:

Example 3 were produced in same manner as Example 2, wherein the powder additionally contains a low-density polyethylene wax (A-C^{®} 8A from Honeywell). The amount of wax in the mixture was 1%.

### Production method of Example 4:

Example 4 were produced in same manner as Example 2, except of using an epoxidized ortho-cresolic novolac (Araldite^{®} ECN 9699 from Huntsman) as the epoxy compound. The composition of isocyanate/epoxy mixture by weight was 61/39.

### Production method of Comparative Example 1:

Cords made from polyester (polyethylene terephthalate (PET), 2-plied, 1670 dtex, 390x390 twisted, non-adhesive activated) were dipped into an aqueous composition consisting of 95.1 mass% water, 3.0 mass% of an ε-caprolactam-blocked 4,4'-methylene diphenyl diisocyanate (Grilbond^{®} IL-6 from Ems-Griltech), and 1.9 mass% of an epoxidized ortho-cresolic novolac (EPI-REZ^{®} Resin 6006-W-68 from Hexion), wherein a molar ratio of the ε-caprolactam-blocked 4,4'-methylene diphenyl diisocyanate to the epoxidized ortho-cresolic novolac is 1.5.

The polyester cord is first passed through the above aqueous composition, heat treated at 220-250°C for 30-60 seconds and then dipped into RFL. After drying at 120-140°C for 20-60 seconds, the cord is heat treated at 220-250°C for 30-60 seconds.

That is, in Comparative Example 1, the powder coating step of Example 1 was exchanged by a dip coating step and an additional drying step.

The powder compositions used in each of Examples 1 to 4 and Comparative Example 1 are summarized in the following Table 3.

**Table 3:**

| Powder composition | Ex. 1 | Ex. 2 | Ex. 3 | Ex. 4 | Comp. Ex. 1 |
|---|---|---|---|---|---|
| Isocyanate compound (I) | I1 | I2 | I2 | I2 | I1 |
| Epoxy compound (E) | E2 | E2 | E2 | E3 | E1 |
| Wax (W) | - | - | W1 | - | - |
| Molar ratio of I/E | 1.2 | 1.2 | 1.2 | 1.2 | 1.5 |

| | |
|---|---|
| I1: | ε-caprolactam-blocked 4,4'-methylene diphenyl diisocyanate (Grilbond^{®} IL-6 from Ems-Griltech) |
| I2: | Internally blocked cycloaliphatic polyisocyanate adduct (Vestagon^{®} BF 1321 from Evonik) |
| E1: | Epoxidized ortho-cresolic novolac (EPI-REZ^{®} Resin 6006-W-68 from Hexion) |
| E2: | novolac modified reaction product of epichlorohydrin and bisphenol A (D.E.R.^{®} 642U-20 from Dow Chemical) |
| E3: | Epoxidized ortho-cresolic novolac (Araldite^{®} ECN 9699 from Huntsman) |
| W1: | Low-density polyethylene wax (A-C^{®} 8A from Honeywell) |

### Adhesion force and coverage:

The adhesion forces of all the final elastomeric articles of Examples 1 to 4 and Comparative Example 1, which were produced using the first rubberizing composition, were determined in accordance with ISO 36:2011. The results are provided in Table 4, wherein the adhesion force values are given in % relative to the (initial) adhesion force value of Comparative Example 1 which has been normalized to 100%. The assessment of the adhesion force was conducted according to DIN ISO 6133:2004-05, procedure B.

In addition, the resulting separated areas of the test samples were assessed visually on a scale from 1 to 5 using the following coverage rating:

| | | |
|---|---|---|
| 1 | 0% | completely free of rubber |
| 2 | 25% | mainly free of rubber |
| 3 | 50% | half covered by rubber |
| 4 | 75% | mainly covered by rubber |
| 5 | 100% | completely covered by rubber |

In this context, the side with the poorest coverage was used for the evaluation. In determining the coverage rating, half ratings *(i.e.,* 3.5) were also permitted. For each example, each of the reported adhesion force and the reported coverage reported is a mean value from three measurements. The results are also provided in Table 4.

**Table 4:**

| | Ex. 1 | Ex. 2 | Ex. 3 | Ex. 4 | Comp. Ex. 1 |
|---|---|---|---|---|---|
| Adhesion force [%] | 111 | 106 | 109 | 116 | 100 |
| Coverage | 4.5 | 5.0 | 5.0 | 5.0 | 4.0 |

### Over-cure adhesion force:

Furthermore, retention of adhesion force over prolonged vulcanization times (60 min, 90 min, and 120 min), which is also known as "over-cure adhesion force", were determined.

In this context, all the final elastomeric articles of Examples 1 to 4 and Comparative Example 1 were produced as described above, wherein the time of vulcanizing is increased, *i.e.* to 20 min, 60 min, 90 min, or 120 min, and another (proprietary) rubberizing composition is used. The respective adhesion forces were determined as described above and being summarized in Table 5.

**Table 5:**

| Adhesion force [%] | Ex. 1 | Ex. 2 | Ex. 3 | Ex. 4 | Comp. Ex. 1 |
|---|---|---|---|---|---|
| after 20 min vulcanizing | 119 | 116 | 111 | 106 | 100 |
| after 60 min vulcanizing | 86 | 89 | 85 | 97 | 91 |
| after 90 min vulcanizing | 49 | 82 | 63 | 40 | 56 |
| after 120 min vulcanizing | 49 | 48 | 62 | 32 | 32 |

As can be seen from Tables 4 and 5 above, not only in standard adhesion force and coverage but also in over-cure adhesion force, a noticeable improvement was observed for Examples 1 to 4 in contrast to Comparative Example 1.

Moreover, when using an internally blocked cycloaliphatic polyisocyanate adduct (Vestagon^{®} BF 1321 from Evonik) as the isocyanate compound instead of ε-caprolactam-blocked 4,4'-methylene diphenyl diisocyanate (Grilbond^{®} IL-6 from Ems-Griltech), a further improvement in over-cure adhesion and coverage was achieved (cf adhesion forces after 90 min vulcanizing and coverage of Examples 1 and 2).

Besides, when using a novolac modified reaction product of epichlorohydrin and bisphenol A (D.E.R.^{®} 642U-20 from Dow Chemical) instead of an epoxidized ortho-cresolic novolac (Araldite^{®} ECN 9699 from Huntsman), a further improvement in over-cure adhesion was achieved (*cf.* adhesion forces after 90 min and 120 min vulcanizing of Examples 2 and 4).

In addition, adding a low-density polyethylene wax (A-C^{®} 8A from Honeywell) to the powder results in a further improvement in over-cure adhesion (*cf.* adhesion forces after 120 min vulcanizing of Examples 2 and 3).

### Reference signs:

- 1: First dipping zone
- 2: Second dipping zone
- 3: Aqueous activation dipping composition
- 4: First drying oven
- 5: First heat-treating oven
- 6: Aqueous RFL composition/aqueous RF-free composition
- 7: Second drying oven
- 8: Second heat-treating oven
- 9: Activation powder coating zone
- 10: Coating device having an alternating electric field
- 11: Melting zone

## Claims

1. A method of producing a surface-modified textile, which comprises in that order the following steps:
(a) a first coating step of coating a surface of a textile with a powder by simultaneously subjecting the textile and the powder to an alternating electric field, wherein the powder comprises at least one blocked isocyanate group-containing compound and at least one epoxy group-containing compound;
(b) melting the powder;
(c) after step (b), performing a first heat-treatment step of heat-treating the coated textile;
(d) a second coating step of coating a surface of the heat-treated coated textile with an aqueous composition, wherein the aqueous composition comprises at least one latex-based compound and at least one resin forming composition;
(e) a drying step of drying the textile coated with the aqueous composition; and
(f) a second heat-treatment step of heat-treating the dried textile.

2. The method according to claim 1, wherein the alternating electric field is generated by two opposite-facing electrodes, wherein at least one dielectric screen between said two opposite-facing electrodes insulates the two electrodes from each other, and wherein the first coating step is performed within the alternating electric field between said two opposite-facing electrodes.

3. The method according to claim 1 or 2, wherein the textile comprises at least one polyester and/or at least one aramid.

4. The method according to any one of claims 1 to 3, wherein the at least one blocked isocyanate group-containing compound comprises a compound having at least two blocked isocyanate groups.

5. The method according to any one of claims 1 to 4, wherein an isocyanate group of the at least one blocked isocyanate group-containing compound is blocked by a blocking group or by self-blocking, wherein self-blocking represents a dimerization or association of isocyanate groups to a higher homologue, such as uretdione diisocyanate.

6. The method according to any one of claims 1 to 5, wherein the at least one epoxy group-containing compound exhibits a softening point of 50 to 200°C determined as described in the description.

7. The method according to any one of claims 1 to 6, wherein the at least one epoxy group-containing compound comprises a bisphenol A-based epoxy resin and/or a cresol novolac epoxy resin.

8. The method according to any one of claims 1 to 7, wherein a molar ratio of the at least one blocked isocyanate group-containing compound to the at least one epoxy group-containing compound within the powder is 0.5 to 3.0.

9. The method according to any one of claims 1 to 8, wherein the powder further comprises at least one wax.

10. The method according to any one of claims 1 to 9, wherein the textile is a single-end cord or a tire cord fabric.

11. The method according to any one of claims 1 to 10, wherein, in the first heat-treatment step, the coated textile is heat-treated within a first heat treatment temperature range of 90 to 250°C.

12. The method according to any one of claims 1 to 11, wherein the aqueous composition in the second coating step (d) is selected from a RFL (resorcinol-formaldehyde latex) or RFL-free dip.

## Patentansprüche

1. Verfahren zur Herstellung eines oberflächenmodifizierten Textils, welches in dieser Reihenfolge die folgenden Schritte umfasst:
(a) einen ersten Beschichtungsschritt, bei dem die Oberfläche eines Textils mit einem Pulver beschichtet wird, indem das Textil und das Pulver gleichzeitig einem elektrischen Wechselfeld ausgesetzt werden, wobei das Pulver mindestens eine blockierte Isocyanatgruppe enthaltende Verbindung und mindestens eine Epoxidgruppe enthaltende Verbindung umfasst;
b) Schmelzen des Pulvers;
(c) nach Schritt (b) Durchführung eines ersten Wärmebehandlungsschritts, bei dem das beschichtete Textil wärmebehandelt wird;
(d) einen zweiten Beschichtungsschritt, bei dem die Oberfläche des wärmebehandelten beschichteten Textils mit einer wässrigen Zusammensetzung beschichtet wird, wobei die wässrige Zusammensetzung mindestens eine Verbindung auf Latexbasis und mindestens eine harzbildende Zusammensetzung umfasst;
e) einen Trocknungsschritt, bei dem das mit der wässrigen Zusammensetzung beschichtete Textil getrocknet wird; und
f) eine zweiten Wärmebehandlungsschritt, bei dem das getrocknete Textil wärmebehandelt wird.

2. Verfahren nach Anspruch 1, wobei das Wechselfeld durch zwei gegenüberliegende Elektroden erzeugt wird, wobei mindestens eine dielektrische Abschirmung zwischen den beiden gegenüberliegenden Elektroden die beiden Elektroden voneinander isoliert und der erste Beschichtungsschritt innerhalb des Wechselfeldes zwischen den beiden gegenüberliegenden Elektroden durchgeführt wird.

3. Verfahren nach Anspruch 1 oder 2, wobei das Textil mindestens ein Polyester und/oder mindestens ein Aramid enthält.

4. Verfahren nach einem der Ansprüche 1 bis 3, wobei die mindestens eine blockierte Isocyanatgruppe enthaltende Verbindung eine Verbindung mit mindestens zwei blockierten Isocyanatgruppen umfasst.

5. Verfahren nach einem der Ansprüche 1 bis 4, wobei eine Isocyanatgruppe der mindestens einen blockierten Isocyanatgruppe enthaltenden Verbindung durch eine Blockierungsgruppe oder durch Selbstblockierung blockiert wird, wobei die Selbstblockierung eine Dimerisierung oder Assoziation von Isocyanatgruppen mit einem höheren Homologen, wie Uretdiondiisocyanat, darstellt.

6. Verfahren nach einem der Ansprüche 1 bis 5, wobei die mindestens eine Epoxidgruppe enthaltende Verbindung einen Erweichungspunkt von 50 bis 200 °C aufweist, der wie in der Beschreibung angegeben bestimmt wird.

7. Verfahren nach einem der Ansprüche 1 bis 6, wobei die mindestens eine Epoxidgruppe enthaltende Verbindung ein Bisphenol-A-basiertes Epoxidharz und/oder ein Kresol-Novolak-Epoxidharz umfasst.

8. Verfahren nach einem der Ansprüche 1 bis 7, wobei das Molverhältnis der mindestens einen blockierten Isocyanatgruppe enthaltenden Verbindung zu der mindestens einen Epoxidgruppe enthaltenden Verbindung in dem Pulver 0,5 bis 3,0 beträgt.

9. Verfahren nach einem der Ansprüche 1 bis 8, wobei das Pulver weiter mindestens ein Wachs enthält.

10. Verfahren nach einem der Ansprüche 1 bis 9, wobei es sich bei dem Textil um ein einsträngiges Kordgewebe oder ein Reifenkordgewebe handelt.

11. Verfahren nach einem der Ansprüche 1 bis 10, wobei in dem ersten Wärmebehandlungsschritt das beschichtete Textil in einem ersten Wärmebehandlungstemperaturbereich von 90 bis 250 °C wärmebehandelt wird.

12. Verfahren nach einem der Ansprüche 1 bis 11, wobei die wässrige Zusammensetzung in dem zweiten Beschichtungsschritt (d) aus einem RFL- (Resorcin-Formaldehyd-Latex) oder RFL-freien Tauchbad ausgewählt wird.

## Revendications

1. Procédé de fabrication d'un textile à surface modifiée, comprenant, dans cet ordre, les étapes suivantes :
(a) une première étape de revêtement consistant à revêtir une surface d'un textile avec une poudre en soumettant simultanément le textile et la poudre à un champ électrique alternatif, la poudre comprenant au moins un composé contenant un groupe isocyanate bloqué et au moins un composé contenant un groupe époxy ;
(b) la fusion de la poudre ;
(c) après l'étape (b), une première étape de traitement thermique consistant à soumettre le textile revêtu à un traitement thermique ;
(d) une deuxième étape de revêtement consistant à revêtir une surface du textile revêtu ayant subi le traitement thermique avec une composition aqueuse, la composition aqueuse comprenant au moins un composé à base de latex et au moins une composition formant une résine ;
(e) une étape de séchage consistant à sécher le textile revêtu de la composition aqueuse ; et
(f) une deuxième étape de traitement thermique consistant à soumettre le textile séché à un traitement thermique.

2. Procédé selon la revendication 1, dans lequel le champ électrique alternatif est généré par deux électrodes disposées l'une en regard de l'autre, au moins un écran diélectrique étant disposé entre les deux électrodes afin de les isoler l'une de l'autre, et la première étape de revêtement étant réalisée dans le champ électrique alternatif entre lesdites deux électrodes.

3. Procédé selon la revendication 1 ou 2, dans lequel le textile comprend au moins un polyester et/ou au moins un aramide.

4. Procédé selon l'une quelconque des revendications 1 à 3, dans lequel ledit au moins un composé contenant un groupe isocyanate bloqué comprend un composé comportant au moins deux groupes isocyanate bloqués.

5. Procédé selon l'une quelconque des revendications 1 à 4, dans lequel un groupe isocyanate dudit au moins un composé contenant un groupe isocyanate bloqué est bloqué par un groupe de blocage ou par autoblocage, l'autoblocage représentant une dimérisation ou une association de groupes isocyanate en un homologue supérieur, tel qu'un diisocyanate d'urétdione.

6. Procédé selon l'une quelconque des revendications 1 à 5, dans lequel ledit au moins un composé contenant un groupe époxy présente un point de ramollissement de 50 à 200 °C, déterminé comme décrit dans la description.

7. Procédé selon l'une quelconque des revendications 1 à 6, dans lequel ledit au moins un composé contenant un groupe époxy comprend une résine époxy à base de bisphénol A et/ou une résine époxy novolaque de crésol.

8. Procédé selon l'une quelconque des revendications 1 à 7, dans lequel le rapport molaire dudit au moins un composé contenant un groupe isocyanate bloqué audit au moins un composé contenant un groupe époxy dans la poudre est compris entre 0,5 et 3,0.

9. Procédé selon l'une quelconque des revendications 1 à 8, dans lequel la poudre comprend en outre au moins une cire.

10. Procédé selon l'une quelconque des revendications 1 à 9, dans lequel le textile est un câble textile à un seul bout (*single-end cord*) ou une nappe de câbles pour pneumatiques *(tire cord fabric).*

11. Procédé selon l'une quelconque des revendications 1 à 10, dans lequel, lors de la première étape de traitement thermique, le textile revêtu est soumis à un traitement thermique dans une première plage de température comprise entre 90 et 250 °C.

12. Procédé selon l'une quelconque des revendications 1 à 11, dans lequel la composition aqueuse utilisée lors de la deuxième étape de revêtement (d) est choisie parmi un bain RFL (latex résorcine-formaldéhyde) ou un bain d'imprégnation exempt de RFL.
